# EUROPÄISCHE PATENTSCHRIFT

(11) **EP 3 538 782 B1**
(45) Veröffentlichungstag und Bekanntmachung des Hinweises auf die Patenterteilung: **11.09.2024**
(21) Anmeldenummer: 17790679.9
(22) Anmeldetag: 24.10.2017
(51) Int. Cl.: F16D 1/08, H02K 7/00, F16D 1/04

(54) **GETRIEBEMOTOR, AUFWEISEND EIN VON EINEM ELEKTROMOTOR ANGETRIEBENES GETRIEBE**
GEAR MOTOR COMPRISING A GEAR MECHANISM DRIVEN BY AN ELECTRIC MOTOR
MOTORÉDUCTEUR, COMPRENANT UNE TRANSMISSION ENTRAÎNÉE PAR UN MOTEUR ÉLECTRIQUE

(30) Priorität: 08.11.2016 DE 102016013197
(43) Veröffentlichungstag der Anmeldung: 18.09.2019
(73) Patentinhaber: SEW-EURODRIVE GmbH & Co. KG, 76646 Bruchsal (DE)
(72) Erfinder: HANNET, Stefan, 68723 Schwetzingen (DE)
(86) Internationale Anmeldenummer: PCT/EP2017/025314
(87) Internationale Veröffentlichungsnummer: WO 2018/086754

(56) Entgegenhaltungen:
- WO-A1-2014/187540
- DE-B3- 102004 011 361
- DE-B3- 102013 113 639
- DE-U1- 29 913 996
- GB-A- 1 346 363

## Beschreibung

Die Erfindung betrifft einen Getriebemotor, aufweisend ein von einem Elektromotor angetriebenes Getriebe.

Es ist allgemein bekannt, dass ein Getriebemotor ein von einem Elektromotor angetriebenes Getriebe aufweist.

**Aus der** WO 2014/187540 A1 **ist als nächstliegender Stand der Technik eine Spannverbindung bei einem Getriebemotor bekannt, wobei eine radial orientierte Madenschraube in der Spannverbindung offenbart ist.**

**Aus der** DE 10 2004 011 361 B3 **ist eine Verbindung einer geschlitzten Hohlwelle mit einer Welle bekannt, bei der ebenfalls eine radial orientierte Madenschraube in der Spannverbindung offenbart ist.**

**Aus der** DE 299 13 996 U1 **ist ein Getriebe bekannt.**

**Aus der** GB 1 346 363 A **ist ein axial orientierter Gewindestift bei einer Welle-Nabe-Verbindung bekannt.**

**Aus der** DE 10 2013 113 639 B3 **ist eine Befestigungsvorrichtung zum konzentrischen Befestigen einer Welle an eine Drehgeberwelle und Motorfeedback-System mit dieser Befestigung bekannt.**

Der Erfindung liegt daher die Aufgabe zugrunde, einen Getriebemotor einfach herstellbar weiterzubilden.

Erfindungsgemäß wird die Aufgabe bei dem Getriebemotor nach den in Anspruch 1 angegebenen Merkmalen gelöst.

Wichtige Merkmale der Erfindung bei dem Getriebemotor sind, dass er ein von einem Elektromotor angetriebenes Getriebe aufweist,
wobei die Rotorwelle des Elektromotors mittels eines Spannrings kraftschlüssig verbunden, insbesondere aufgeschrumpft verbunden, mit einer Adapterwelle ist, welche drehfest mit einem eintreibenden Verzahnungsteil des Getriebes des Getriebemotors verbunden ist,
wobei ein Schraubteil, insbesondere Gewindestift, zwischen Spannring und Adapterwelle angeordnet ist,
insbesondere wobei das Schraubteil den Spannring berührt und die Adapterwelle berührt.

Von Vorteil ist dabei, dass der Spannring in Umfangsrichtung formschlüssig gesichert ist. Auf diese Weise ist der bei der Montage mit dem Schlitz der Adapterwelle in Deckung gebrachte Schlitz des Spannrings in seiner zur Adapterwelle relativen Drehlage fixierbar. Somit ist die kraftschlüssige Verbindung optimiert, da dann eine hohe Elastizität vorhanden ist, wenn die beiden Schlitze in der gleichen Umfangsposition gehalten sind.

Die Adapterwelle darf auch einen weiteren Schlitz aufweisen, der aber eine andere Umfangsposition aufweist. Die an der Adapterwelle angeordneten Schlitze sind aber nicht axial durchgehend.

Der am Spannring vorhandene Schlitz ist axial durchgehend und auch von der Innenseite nach radial außen durchgehend.

Der Spannring und die Adapterwelle sind vorzugsweise aus Metall, wie beispielsweise Stahl ausgeführt.

Das Schraubteil ist vorzugsweise aus Stahl ausgeführt und weist ein Außengewinde auf.

Bei einer vorteilhaften Ausgestaltung ist das eintreibende Verzahnungsteil des Getriebes, insbesondere das Sonnenrad des als Planetengetriebe ausgeführten Getriebes, drehfest mit der Adapterwelle verbunden. Von Vorteil ist dabei, dass das vom Motor erzeugte Drehmoment über die durch den Spannring bewirkte kraftschlüssige Verbindung an die Adapterwelle übertragen wird.

**Erfindungsgemäß** ist das Schraubteil in eine im Spannring eingebrachte Gewindebohrung zumindest teilweise eingeschraubt, wobei die Gewindebohrung nach radial innen hin offen ausgeführt ist. Von Vorteil ist dabei, dass das Schraubteil formschlüssig und präzise sowie spielfrei mit dem Spannring verbunden ist.

**Erfindungsgemäß** ist die Gewindebohrung an der radialen Innenseite des Spannrings angeordnet, wobei die Gewindebohrung axial, also parallel zur Ringachse des Spannrings und/oder zur Drehachse der Adapterwelle ausgerichtet ist. Von Vorteil ist dabei, dass die Gewindebohrung sich axial erstreckt und an der radialen Innenseite angeordnet ist. Somit ragt der aus dem Spannring herausragende Bereich des Schraubteils in die Ausnehmung, insbesondere Bohrung, der Adapterwelle hinein, so dass eine formschlüssige Sicherung in Umfangsrichtung bezogen auf die Drehachse der Adapterwelle herstellbar ist.

Bei einer vorteilhaften Ausgestaltung ist der Radialabstand, insbesondere der auf die Ringachse des Spannrings und/oder auf die Drehachse der Adapterwelle bezogene Radialabstand, der Mittelachse und/oder der Schraubgewindeachse des Schraubteils, insbesondere Gewindestifts, betragsmäßig kleiner als die Summe aus dem Radius der Gewindebohrung und dem Innenradius des Spannrings. Von Vorteil ist dabei, dass der Spannring wie auch ein Torus einen Innenradius und einen Außenradius aufweist. Somit ragt das Schraubteil nach radial innen aus dem Spannring hervor, also zur Adapterwelle hin.

Erfindungsgemäß überlappt der von der Gewindebohrung überdeckte Radialabstandsbereich mit dem vom Spannring überdeckten Radialabstandsbereich. Von Vorteil ist dabei, dass der Spannring am radial inneren Randbereich hervorragt.

**Erfindungsgemäß** überlappt der von dem Schraubteil überdeckte Radialabstandsbereich mit dem von der Adapterwelle überdeckten Radialabstandsbereich. Von Vorteil ist dabei, dass durch den Überlapp eine formschlüssige Verbindung erreicht wird und somit die Fixierung der relativen Lage in Umfangsrichtung.

Erfindungsgemäß ragt das Schraubteil in eine in der Adapterwelle eingebrachte Bohrung zumindest teilweise hinein, insbesondere wobei die Bohrung nach radial außen hin offen ausgeführt ist. Von Vorteil ist dabei, dass der Formschluss in einfacher Weise herstellbar ist.

Bei einer vorteilhaften Ausgestaltung ist die Bohrung an der radialen Außenseite der Adapterwelle angeordnet,
insbesondere wobei die Bohrung axial, also parallel zur Ringachse des Spannrings und/oder zur Drehachse der Adapterwelle, ausgerichtet ist. Von Vorteil ist dabei, dass ein Formschluss in einfacher Weise erzeugbar ist.

Bei einer vorteilhaften Ausgestaltung ist der von der Bohrung überdeckte Radialabstandsbereich von demjenigen Radialabstandsberiech überdeckt, welcher von der Adapterwelle überdeckt ist, insbesondere in dem von dem Spannring überdeckten axialen Bereich. Von Vorteil ist dabei, dass ein Hineinragen des Schraubteils in die Adapterwelle erreichbar ist.

Bei einer vorteilhaften Ausgestaltung ist das Schraubteil radial zwischen Spannring und Adapterwelle angeordnet. Von Vorteil ist dabei, dass ein Formschluss in einfacher Weise erzielbar ist.

Bei einer vorteilhaften Ausgestaltung ist die Adapterwelle mittels eines Lagers in einem

Gehäuseteil des Getriebes gelagert, wobei das Gehäuseteil mit einem weiteren Gehäuseteil drehfest verbunden ist, in welchem ein Lager zur Lagerung der Rotorwelle aufgenommen ist. Von Vorteil ist dabei, dass die Adapterwelle mit der Rotorwelle drehfest verbunden ist und die Gehäuseteile des Getriebes und des Motors miteinander drehfest verbunden sind.

Bei einer vorteilhaften Ausgestaltung weist die Adapterwelle an ihrem Außenumfang eine in auf die Drehachse der Adapterwelle bezogene Umfangsrichtung umlaufende Ringnut auf, in welcher ein Federelement, insbesondere O-Ring, aufgenommen ist,
wobei der Spannring eine in auf die Drehachse der Adapterwelle bezogen Umfangsrichtung umlaufende Ringnut aufweist, in welcher das Federelement aufgenommen ist, insbesondere wobei die Ringachse der Ringnut der Adapterwelle und die Ringachse der Ringnut des Spannrings koaxial zur Drehachse der Adapterwelle ausgerichtet ist. Von Vorteil ist dabei, dass eine axiale Sicherung des Spannrings in einfacher Weise erreichbar ist. Vorzugsweise ist das Federelement aus Gummi oder aus einem Kunststoff ausgeführt.

Bei einer vorteilhaften Ausgestaltung ist der vom Federelement überdeckte axiale Bereich in dem vom Spannring überdeckten axialen Bereich enthalten. Von Vorteil ist dabei, dass der Spannring in einfacher Weise axial gesichert ist.

Bei einer vorteilhaften Ausgestaltung ist das Federelement radial zwischen Spannring und Adapterwelle angeordnet. Von Vorteil ist dabei, dass beim Montieren das Federelement in einer der beiden Ringnuten aufgenommen ist und dann beim axialen Einschieben sich in die andere Ringnut hineinerstreckt, sobald diese andere Ringnut im selben axialen Bereich eintrifft, in welcher die erste Ringnut angeordnet ist.

Bei einer vorteilhaften Ausgestaltung weist der Spannring einen radial sich erstreckenden Schlitz auf, wobei eine in einer tangential zur Drehachse der Adapterwelle ausgerichtete Schraube zum Spannen des Spannrings vorgesehen ist. Von Vorteil ist dabei, dass eine einfache kraftschlüssige Verbindung bewirkbar ist.

Weitere Vorteile ergeben sich aus den Unteransprüchen. Die Erfindung ist auf die beigefügten Ansprüche beschränkt.

Die Erfindung wird nun anhand von Abbildungen näher erläutert:
In der Figur 1 ist der angeschnittenen Adapterbereich eines erfindungsgemäßen Getriebemotors in Schrägansicht dargestellt, wobei ein Spannring 3 verwendet ist.
In der Figur 2 ist eine zugehörige Schnittansicht gezeigt.
In der Figur 3 ist ein Querschnitt durch den Spannring 3 gezeigt.
In der Figur 4 ist ein Längsschnitt durch den Adapterbereich dargestellt.
In der Figur 5 ist der angeschnittenen Adapterbereich eines anderen erfindungsgemäßen Getriebemotors in Schrägansicht dargestellt, wobei ein Spannring 3 verwendet ist.
In der Figur 6 ist eine zur Figur 5 zugehörige Schnittansicht gezeigt.
In der Figur 7 ist ein Querschnitt durch den Spannring 3 dieses anderen erfindungsgemäßen Getriebemotors gezeigt.
In der Figur 8 ist ein zu diesem anderen erfindungsgemäßen Getriebemotor zugehöriger Längsschnitt durch den Adapterbereich dargestellt.

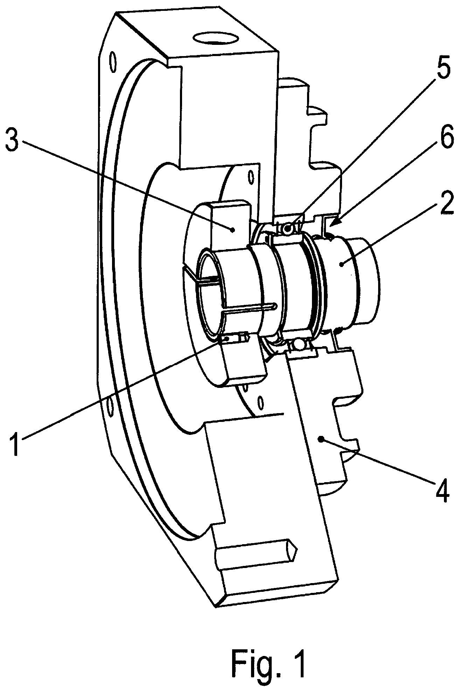

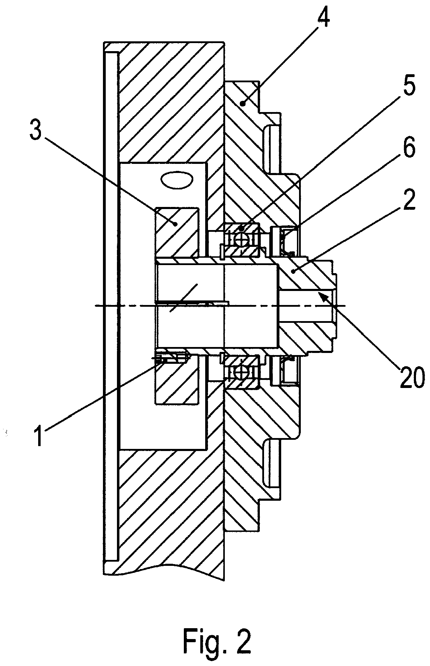

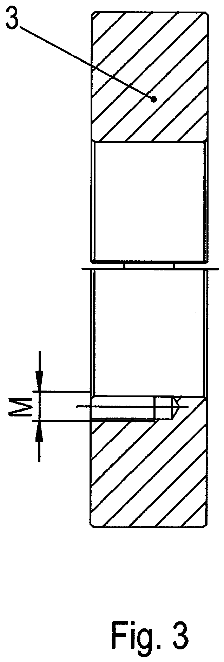

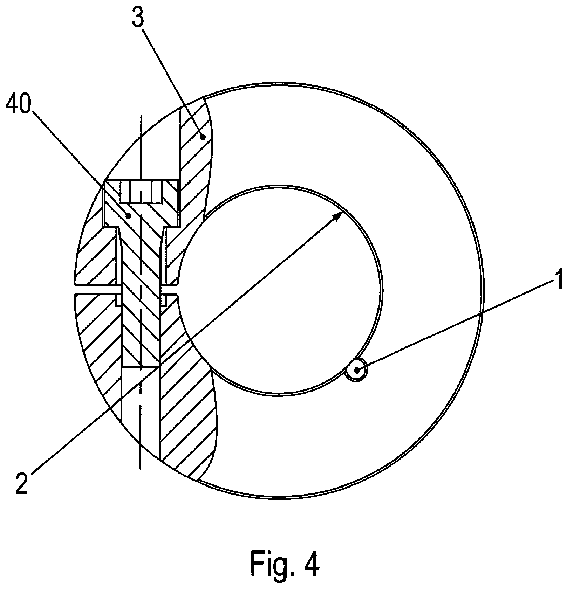

Wie in dem Ausführungsbeispiel nach Figuren 1, 2, 3 und 4 gezeigt, ist eine Adapterwelle 2 über ein Lager 5 in einem Gehäuseteil 4 drehbar gelagert.

Der Adapterbereich ist dabei axial zwischen dem Getriebe und dem Motor angeordnet.

Das eintreibende Verzahnungsteil des Getriebes, insbesondere Sonnenradritzel des Planetengetriebes, weist einen Zapfenabschnitt auf, der gerändelt ist und in eine Ausnehmung 20 der Adapterwelle 2 eingepresst ist. Somit ist eine formschlüssige spielfreie und hoch belastbare Verbindung zwischen eintreibendem Verzahnungsteil und Adapterwelle 2 bewirkt.

An dem vom Getriebe abgewandten axialen Endbereich der Adapterwelle 2 ist diese Adapterwelle 2 hohl ausgeführt und weist zumindest einen axial sich erstreckenden Schlitz auf.

Ein Spannring 3, welcher vorzugsweise ebenfalls einen axial sich erstreckenden Schlitz, insbesondere Axialschlitz, aufweist, ist auf diesen axialen Endbereich aufgesteckt.

Somit überlappt der vom Spannring 3 überdeckte axiale Bereich mit dem von dem Schlitz der Adapterwelle 2 überdeckten axialen Bereich.

Nach Einstecken einer Rotorwelle des Elektromotors in den hohlen Bereich der Adapterwelle 2 ist der Spannring mittels einer Spannschraube 40 aufschrumpfbar auf die Adapterwelle 2. Denn die Spannschraube ist in tangentialer Richtung ausgerichtet und ragt durch den Schlitz des Spannrings hindurch, wobei sie in eine Gewindebohrung eingeschraubt ist und dabei den Spannring 3 mittels Drücken des Schraubenkopfes gegen eine Stufe einer Stufenbohrung elastisch spannt. Somit ist also ein kraftschlüssiges Verbinden der Rotorwelle mit der Adapterwelle 2 erreicht.

Zur Fixierung der relativen Drehlage des Spannrings 3 zur Adapterwelle 2 hin ist ein axial gerichteter Gewindestift 1 vorgesehen, der in eine Ausnehmung eingeschraubt ist, welche aus einer ersten Ausnehmung im Spannring 3 und einer zweiten Ausnehmung in der Adapterwelle 2 gebildet ist.

Dabei ist die erste Ausnehmung eine Gewindebohrung, welche an der Innenseite des Spannrings 3 axial, also parallel zur Ringachse des Spannrings 3 eingebracht ist, wobei die Gewindebohrung nach radial innen hin offen ausgeführt ist, insbesondere also der Radialabstand der Mittelachse und/oder der Schraubgewindeachse des Gewindestifts 1 betragsmäßig kleiner ist als die Summe aus dem Radius der Gewindebohrung und dem Innenradius des Spannrings 3. Der vom Gewindestift 1, insbesondere auf die Ringsachse bezogene, überdeckte Radialabstandsbereich überlappt also mit dem vom Spannring, insbesondere auf die Ringsachse bezogene, überdeckte Radialabstandsbereich.

Zwischen Adapterwelle 2 und Gehäuseteil 4 ist ein Wellendichtring 6 angeordnet, der im Gehäuseteil 4 aufgenommen ist und dessen Dichtlippe auf der Adapterwelle 2 läuft.

Die zweite Ausnehmung ist als Rundbohrung ausgeführt, die nach radial außen, also zum Spannring 3 hin, offen ausgeführt ist. Die Rundbohrung in der Adapterwelle 2 ist ebenso wie die Gewindebohrung im Spannring 3 nicht gänzlich im Material, sondern an der Oberfläche eingebracht, so dass die Rundbohrung nur etwa ein Viertel ihres Umfangs, insbesondere zwischen 15% und 50%, im Material der Adapterwelle 2 vorgesehen ist und die Gewindebohrung nur etwa drei Viertel ihres Umfangs, insbesondere zwischen 85% und 50%, im Material des Spannrings 3 vorgesehen ist.

Mittels des in die Gewindebohrung eingeschraubten und die Rundbohrung teilweise ausfüllenden Gewindestifts 1 ist somit der in der Adapterwelle 2 angeordnete Schlitz relativ zu dem in dem Spannring 3 angeordneten Schlitz in derselben Umfangsposition fixierbar. Beim Auswuchten des Spannrings 3 ist nicht nur eine Abfräsung an dem der Spannschraube 60 radial gegenüberliegenden Oberflächenbereich vornehmbar, sondern eine Erweiterung dieser Abfräsung zum Auswuchten des Gewindestifts 1.

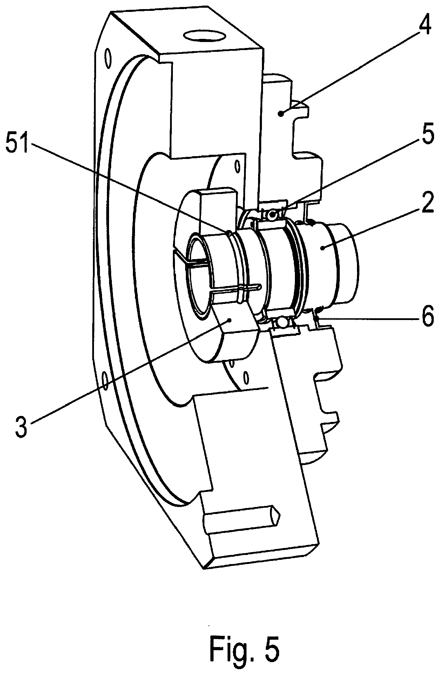

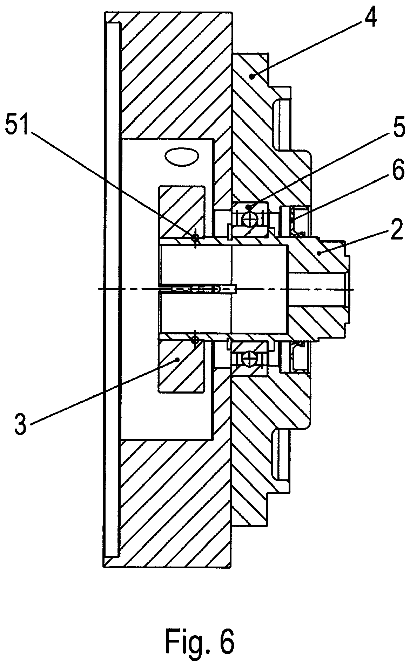

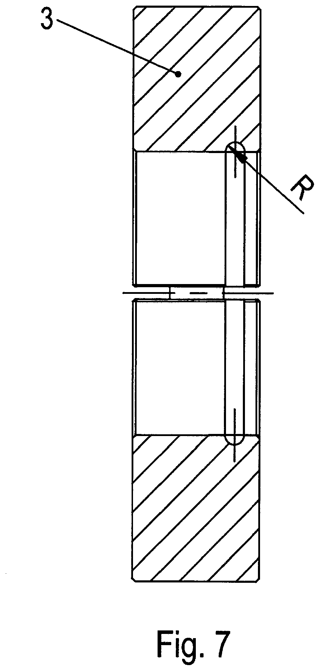

Wie in den Figuren 5 bis 9 gezeigt, ist bei dem anderen Ausführungsbeispiel eine axiale Sicherung des Spannrings 3 relativ zur Adapterwelle 2 mittels eines Federelements 51, insbesondere O-Rings, vorhanden.

Hierzu weist der Spannring an seiner Innenseite eine Ringnut auf und die Adapterwelle 2 ebenfalls eine Ringnut. Die von den beiden Ringnuten überdeckten axialen Bereiche gleichen sich oder überlappen einander.

Zur Montage wird das in der Ringnut der Adapterwelle 2 aufgenommene Federelement 51 zusammen mit der Adapterwelle 2 in den Spannring 3 eingeschoben, wobei das Federelement 51 so lange elastisch verformt bleibt, bis die in dem Spannring 3 eingebrachte Ringnut in Deckung zur Ringnut der Adapterwelle 2 kommt. Sobald das Federelement 51 sich in die im Spannring 3 eingebrachte Ringnut ausdehnt, ist eine axiale Sicherung der Adapterwelle 2 in dem Spannring 3 erreicht.

Dabei ist der vom Federelement 51 überdeckte axiale Bereich von dem vom Spannring 3 überdeckten axialen Bereich umfasst.

Der vom axial sich im hohlen Bereich der Adapterwelle 2 erstreckenden Schlitz überdeckte axiale Bereich umfasst den vom Spannring 3 überdeckten axialen Bereich.

Die Adapterwelle 2 ist wiederum über ein Lager 5, insbesondere Kugellager, in einem Gehäuseteil 4 gelagert und mittels eines Wellendichtrings 6 gegenüber dem Gehäuseteil 4 abgedichtet, so dass das getriebeseitig anstehende Schmieröl nicht in den Innenraum des antreibenden Elektromotors eindringen kann. Die Rotorwelle des Elektromotors ist zumindest teilweise in den hohlen Bereich der Adapterwelle 2 eingeschoben und mittels Betätigen der Spannverbindung, also Anziehens und/oder Einschraubens der tangential ausgerichteten Spannschraube 40, kraftschlüssig verbunden mit der Adapterwelle 2.

Die Verwendung eines O-Rings als Federelement 51 für die axiale Sicherung des Spannrings 3 bewirkt zwar auch eine dichte Verbindung des Spannrings 3 mit der Adapterwelle 2; jedoch ist diese Abdichtung ohne Wirkung, da der Spannring im Innenraumbereich des Motors angeordnet ist. Die Abdichtung zum schmierölbefüllten Innenraumberiech des Getriebes wird mittels des Wellendichtrings 6 bewirkt.

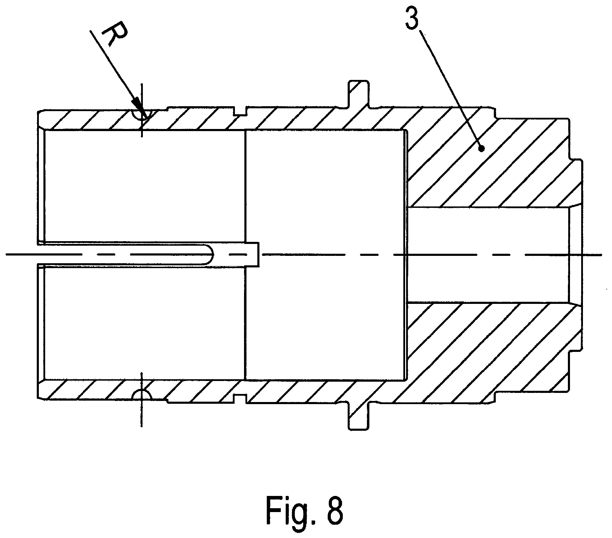

Wie in Figur 8 gezeigt, ist der hohle Beriech der Adapterwelle 2 nicht axial durchgehend, sondern sacklochartig ausgeführt, wobei der Schlitz sich nicht über die volle axiale Länge des hohlen Bereichs der Adapterwelle 2 erstreckt.

Die an der Außenseite des hohlen Bereichs angeordnete Ringnut zur Aufnahme des Federelements 51 bewirkt eine Verringerung der Wandstärke im entsprechenden axialen Beriech.

Die axiale Sicherung mittels Federelement 51 gemäß Figuren 5 bis 8 ist auch bei dem Ausführungsbeispiel nach den Figuren 1 bis 4 zusätzlich vorsehbar. Somit ist der Spannring dann axial und in Umfangsrichtung gesichert.

Vorzugsweise ist der Querschnitt der Ringnut im Spannring halbkreisförmig
und der Querschnitt der Ringnut in der Adapterwelle halbkreisförmig,
insbesondere wobei der Radius des Querschnitts der Ringnut im Spannring dem Radius des Querschnitts der Ringnut in der Adapterwelle gleicht. Somit ist nach Einlegen des Federelements 51 keine Luft eingeschlossen.

### Bezugszeichenliste

1 Gewindestift
2 Adapterwelle
3 Spannring
4 Gehäuseteil
5 Lager
6 Wellendichtring
20 Ausnehmung zur Aufnahme eines an dem Sonnenrad ausgebildeten Zapfenabschnitts
40 Spannschraube
51 Federelement, insbesondere O-Ring

## Patentansprüche

1. Getriebemotor, aufweisend ein von einem Elektromotor angetriebenes Getriebe,
wobei die Rotorwelle des Elektromotors mittels eines Spannrings (3) kraftschlüssig verbunden, insbesondere aufgeschrumpft verbunden, mit einer Adapterwelle (2) ist, welche drehfest mit einem eintreibenden Verzahnungsteil des Getriebes des Getriebemotors verbunden ist,
**wobei** ein Schraubteil (1), insbesondere Gewindestift, zwischen Spannring (3) und Adapterwelle (2) angeordnet ist,
**insbesondere wobei das Schraubteil (1) den Spannring (3) berührt und die Adapterwelle (2) berührt,**
wobei das **Schraubteil (1) in eine im Spannring (3) eingebrachte Gewindebohrung zumindest teilweise eingeschraubt ist,**
wobei das Schraubteil (1) in eine in der Adapterwelle (2) eingebrachte Bohrung zumindest teilweise hineinragt,
**wobei die Gewindebohrung nach radial innen hin offen ausgeführt ist,**
**dadurch gekennzeichnet, dass**
**die Gewindebohrung an der radialen Innenseite des Spannrings (3) angeordnet ist,**
**wobei die Gewindebohrung axial, also parallel zur Ringachse des Spannrings (3) und/oder zur Drehachse der Adapterwelle (2), ausgerichtet ist,**
**wobei der von der Gewindebohrung überdeckte Radialabstandsbereich überlappt mit dem vom Spannring (3) überdeckten** Radialabstandsbereich.

2. Getriebemotor nach Anspruch 1,
**dadurch gekennzeichnet, dass**
das eintreibende Verzahnungsteil des Getriebes, insbesondere das Sonnenrad des als Planetengetriebe ausgeführten Getriebes, drehfest mit der Adapterwelle (2) verbunden ist.

3. Getriebemotor nach mindestens einem der vorangegangenen Ansprüche,
**dadurch gekennzeichnet, dass**
**der Radialabstand, insbesondere der auf die Ringachse des Spannrings (3) und/oder auf die Drehachse der Adapterwelle (2) bezogene Radialabstand, der Mittelachse und/oder der Schraubgewindeachse des Schraubteils, insbesondere Gewindestifts, betragsmäßig kleiner ist als die Summe aus dem Radius der Gewindebohrung und dem Innenradius des Spannrings (3).**

4. Getriebemotor nach mindestens einem der vorangegangenen Ansprüche,
**dadurch gekennzeichnet, dass**
der von dem Schraubteil (1) überdeckte Radialabstandsbereich überlappt mit dem von der Adapterwelle (2) überdeckten Radialabstandsbereich.

5. Getriebemotor nach mindestens einem der vorangegangenen Ansprüche,
**dadurch gekennzeichnet, dass**
**die Bohrung nach radial außen hin offen ausgeführt ist.**

6. Getriebemotor nach mindestens einem der vorangegangenen Ansprüche,
**dadurch gekennzeichnet, dass**
die Bohrung an der radialen Außenseite der Adapterwelle (2) angeordnet ist,
insbesondere wobei die Bohrung axial, also parallel zur Ringachse des Spannrings (3)
und/oder zur Drehachse der Adapterwelle (2), ausgerichtet ist.

7. Getriebemotor nach mindestens einem der vorangegangenen Ansprüche,
**dadurch gekennzeichnet, dass**
der von der Bohrung überdeckte Radialabstandsbereich von demjenigen Radialabstandsberiech überdeckt ist, welcher von der Adapterwelle (2) überdeckt ist, insbesondere in dem von dem Spannring (3) überdeckten axialen Bereich.

8. Getriebemotor nach mindestens einem der vorangegangenen Ansprüche,
**dadurch gekennzeichnet, dass**
das Schraubteil (1) radial zwischen Spannring (3) und Adapterwelle (2) angeordnet ist.

9. Getriebemotor nach mindestens einem der vorangegangenen Ansprüche,
**dadurch gekennzeichnet, dass**
die Adapterwelle (2) mittels eines Lagers (5) in einem Gehäuseteil (4) des Getriebes gelagert ist, wobei das Gehäuseteil (4) mit einem weiteren Gehäuseteil (4) drehfest verbunden ist, in welchem ein Lager (5) zur Lagerung der Rotorwelle aufgenommen ist.

10. Getriebemotor nach mindestens einem der vorangegangenen Ansprüche,
**dadurch gekennzeichnet, dass**
der Spannring (3) einen radial sich erstreckenden Schlitz aufweist, wobei eine in einer tangential zur Drehachse der Adapterwelle (2) ausgerichtete Schraube zum Spannen des Spannrings(3) vorgesehen ist.

## Claims

1. A geared motor, having a gear unit driven by an electric motor,
wherein the rotor shaft of the electric motor by means of a clamping ring (3) is connected in a force-fit, in particular connected by shrinking-on, to an adapter shaft (2) which is connected non-rotatably to an input toothed part of the gear unit of the geared motor,
wherein a screwing part (1), in particular threaded pin, is arranged between the clamping ring (3) and the adapter shaft (2),
in particular wherein the screwing part (1) contacts the clamping ring (3) and contacts the adapter shaft (2),
wherein the screwing part (1) is at least partially screwed into a threaded bore formed in the clamping ring (3),
wherein the screwing part (1) projects at least partially into a bore formed in the adapter shaft (2),
wherein the threaded bore is embodied as open radially inwards,
**characterised in that**
the threaded bore is arranged on the radial inner side of the clamping ring (3),
the threaded bore being oriented axially, i.e. parallel to the ring axis of the clamping ring (3) and/or to the axis of rotation of the adapter shaft (2),
the radial distance region covered by the threaded bore overlapping with the radial distance region covered by the clamping ring (3).

2. A geared motor according to claim 1,
**characterised in that**
the input toothed part of the gear unit, in particular the sun gear of the gear unit which is embodied as a planetary gear, is connected non-rotatably to the adapter shaft (2).

3. A geared motor according to at least one of the preceding claims,
**characterised in that**
the radial distance, in particular the radial distance relative to the ring axis of the clamping ring (3) and/or to the axis of rotation of the adapter shaft (2), of the central axis and/or of the screwing thread axis of the screwing part, in particular threaded pin, is smaller in terms of amount than the sum of the radius of the threaded bore and the internal radius of the clamping ring (3).

4. A geared motor according to at least one of the preceding claims,
**characterised in that**
the radial distance region covered by the screwing part (1) overlaps with the radial distance region covered by the adapter shaft (2).

5. A geared motor according to at least one of the preceding claims,
**characterised in that**
the bore is embodied as open radially outwards.

6. A geared motor according to at least one of the preceding claims,
**characterised in that**
the bore is arranged on the radial outer side of the adapter shaft (2),
in particular with the bore being oriented axially, i.e. parallel to the ring axis of the clamping ring (3) and/or to the axis of rotation of the adapter shaft (2).

7. A geared motor according to at least one of the preceding claims,
**characterised in that**
the radial distance region covered by the bore is covered by that radial distance region which is covered by the adapter shaft (2), in particular in the axial region covered by the clamping ring (3).

8. A geared motor according to at least one of the preceding claims,
**characterised in that**
the screwing part (1) is arranged radially between the clamping ring (3) and the adapter shaft (2).

9. A geared motor according to at least one of the preceding claims,
**characterised in that**
the adapter shaft (2) is mounted by means of a bearing (5) in a housing part (4) of the gear unit, with the housing part (4) being connected non-rotatably to a further housing part (4) in which a bearing (5) for mounting the rotor shaft is received.

10. A geared motor according to at least one of the preceding claims,
**characterised in that**
the clamping ring (3) has a radially-extending slot, with a screw oriented in a tangentially to the axis of rotation of the adapter shaft (2) for tensioning the clamping ring (3).

## Revendications

1. Motoréducteur, comprenant une transmission entraînée par un moteur électrique, l'arbre de rotor du moteur électrique étant relié par complémentarité de force grâce à une bague de serrage (3), en particulier étant relié par frettage, à un arbre adaptateur (2) relié de manière solidaire en rotation à une partie de denture agissante de la transmission du motoréducteur,
une pièce filetée (1), en particulier une tige filetée, étant agencée entre la bague de serrage (3) et l'arbre adaptateur (2),
la pièce filetée (1) venant en particulier en contact avec la bague de serrage (3) et avec l'arbre adaptateur (2),
la pièce filetée (1) étant vissée au moins partiellement dans un alésage fileté ménagé dans la bague de serrage (3),
la pièce filetée (1) faisant saillie au moins partiellement dans une alésage ménagé dans l'arbre adaptateur (2),
l'alésage fileté étant ouvert radialement vers l'intérieur,
**caractérisé en ce que**
l'alésage fileté est agencé sur la face radiale interne de la bague de serrage (3),
l'alésage fileté étant orienté de manière axiale, c'est-à-dire de manière parallèle à l'axe de bague de la bague de serrage (3) et/ou à l'axe de rotation de l'arbre adaptateur (2), la région de distance radiale recouverte par l'alésage fileté chevauchant la région de distance radiale recouverte par la bague de serrage (3).

2. Motoréducteur selon la revendication 1,
**caractérisé en ce que**
la partie de denture agissante de la transmission, en particulier la roue solaire de la transmission mise en oeuvre sous forme d'engrenage planétaire est reliée de manière solidaire en rotation à l'arbre adaptateur (2).

3. Motoréducteur selon au moins l'une quelconque des revendications précédentes,
**caractérisé en ce que**
la distance radiale, en particulier la distance radiale par rapport à l'axe de bague de la bague de serrage (3) et/ou par rapport à l'axe de rotation de l'arbre adaptateur (2), de l'axe central et/ou de l'axe de filet de la pièce filetée, en particulier de la tige filetée, présente une valeur inférieure à la somme du rayon de l'alésage fileté et du rayon intérieur de la bague de serrage (3).

4. Motoréducteur selon au moins l'une quelconque des revendications précédentes,
**caractérisé en ce que**
la région de distance radiale recouverte par la pièce filetée (1) chevauche la région de distance radiale recouverte par l'arbre adaptateur (2).

5. Motoréducteur selon au moins l'une quelconque des revendications précédentes,
**caractérisé en ce que**
l'alésage est ouvert radialement vers l'extérieur.

6. Motoréducteur selon au moins l'une quelconque des revendications précédentes,
**caractérisé en ce que**
l'alésage est agencé sur la face externe de l'arbre adaptateur (2),
l'alésage étant en particulier orienté de manière axiale, c'est-à-dire de manière parallèle à l'axe de bague de la bague de serrage (3) et/ou à l'axe de rotation de l'arbre adaptateur (2).

7. Motoréducteur selon au moins l'une quelconque des revendications précédentes,
**caractérisé en ce que**
la région de distance radiale recouverte par l'alésage est recouverte par la région de distance radiale recouverte par l'arbre adaptateur (2), en particulier dans la région axiale recouverte par la bague de serrage (3).

8. Motoréducteur selon au moins l'une quelconque des revendications précédentes,
**caractérisé en ce que**
la pièce filetée (1) est agencée radialement entre la bague de serrage (3) et l'arbre adaptateur (2).

9. Motoréducteur selon au moins l'une quelconque des revendications précédentes,
**caractérisé en ce que**
l'arbre adaptateur (2) est monté au moyen d'un palier (5) dans une partie formant carter (4) de la transmission, la partie formant carter (4) étant reliée de manière solidaire en rotation à une autre partie formant carter (4) accueillant un palier (5) permettant de monter l'arbre de rotor sur palier.

10. Motoréducteur selon au moins l'une quelconque des revendications précédentes,
**caractérisé en ce que**
la bague de serrage (3) présente une fente s'étendant radialement, une vis orientée de manière tangentielle par rapport à l'axe de rotation de l'arbre adaptateur (2) permettant de serrer la bague de serrage (3).
